# FASCICULE DE BREVET EUROPEEN

(11) **EP 1 880 172 B1**
(45) Date de publication et mention de la délivrance du brevet: **23.10.2013**
(21) Numéro de dépôt: 06727529.7
(22) Date de dépôt: 21.04.2006
(51) Int. Cl.: G01D 7/04

(54) **ACTIONNEUR POUR INDICATEURS DE MESURES**
AKTUATOR FÜR MESSWERTANZEIGER
ACTUATOR FOR MEASUREMENT INDICATORS

(30) Priorité: 12.05.2005 FR 0504800
(43) Date de publication de la demande: 23.01.2008
(73) Titulaire: Société Industrielle de Sonceboz S.A., 2605 Sonceboz (CH)
(72) Inventeur: ZUPPIGER-LACHAT, Corinne, CH-2605 Sonceboz (CH); SIGG, Daniel, CH-2503 Bienne (CH)
(74) Mandataire: Reuteler, Raymond Werner
(86) Numéro de dépôt international: PCT/IB2006/000982
(87) Numéro de publication internationale: WO 2006/120515

(56) Documents cités:
- EP-A- 0 654 718
- EP-A- 1 019 675
- DE-A1- 3 906 721

## Description

La présente invention concerne un actionneur destiné à transmettre des indications de valeurs mesurées, notamment deux indications différentes, en particulier pour un tableau de bord d'un véhicule.

On connaît de tels actionneurs capables d'afficher simultanément deux valeurs mesurées, par exemple vitesse et nombre de tours du moteur ou contenance du réservoir d'essence et température de l'eau du radiateur ou autres paramètres utiles à connaître. Ces actionneurs comprennent généralement deux axes coaxiaux, l'un d'entre eux étant creux. Le premier axe porte une aiguille ou autre indicateur d'une première valeur, le deuxième axe porte une aiguille ou autre indicateur d'une deuxième valeur. Chacun desdits axes est entraîné indépendamment de l'autre par son propre dispositif d'entraînement relié à son dispositif de mesure de valeur particulier.

Un tel actionneur est connu par exemple du brevet EP 1.019.675. Le dispositif décrit dans ce document comprend notamment un premier arbre creux disposé coaxialement autour d'un deuxième arbre, chacun desdits arbres étant entraîné indépendamment par son propre dispositif d'entraînement. Le premier arbre creux est en partie maintenu et guidé par un trou traversant circulaire aménagé dans une première portion du boîtier alors que le deuxième arbre est en partie maintenu et guidé dans un logement creux, faisant office de butée, aménagé dans une deuxième portion du boîtier. Un deuxième maintien et guidage desdits arbres est prévu, sous la forme d'un pontet de montage comportant une bague de guidage disposée coaxialement entre les deux arbres, ladite bague étant en contact avec chacun des deux arbres par deux surfaces de guidage et support coaxiales. Le pontet de montage comportant cette bague de guidage, sert encore de support et de guidage à au moins un pignon des dispositifs d'entraînement des arbres.

Un dispositif constitué de la sorte comporte des désavantages dus en particulier au fait que, à côté des supports et guidages offerts par des portions de boîtiers aux deux arbres, le deuxième support de chaque arbre est commun pour les deux arbres. La fabrication d'un pontet de montage comme décrit dans le document cité est difficile et onéreuse, de par la nécessitée de fabriquer une bague de guidage comportant deux surfaces cylindriques coaxiales de dimensions très précises. La difficulté et le coût sont encore augmentés s'il est nécessaire que le pontet serve encore de support et de guidage à d'autres composants. Par ailleurs, vu la relativement faible épaisseur du dispositif, prévoir un point de guidage commun pour les deux arbres diminue fortement la distance possible entre appuis et guidage d'au moins un des arbres, en l'occurrence l'arbre creux, rendant le guidage de cet arbre peu stable. Ceci aura pour effet d'augmenter l'usure du dispositif, d'augmenter les jeux, et de diminuer la fiabilité de fonctionnement et la longévité du dispositif.

Le but de l'invention est de réaliser un actionneur pour indicateurs de mesures exempt des inconvénients mentionnés des dispositifs de l'art antérieur, notamment de réaliser un actionneur compact, fiable, précis et peu onéreux à fabriquer.

Le but de l'invention est réalisé par un actionneur pour indicateurs de mesures pour un tableau de bord ou instrument d'un véhicule, comprenant un boîtier, un premier moyen de mesure transformant un premier signal électrique de mesure en un premier signal mécanique, un moyen de transmission de ce premier signal mécanique vers un premier arbre chargé de transmettre une première indication de mesure, un deuxième moyen de mesure transformant un deuxième signal électrique de mesure en un deuxième signal mécanique, et un moyen de transmission de ce deuxième signal mécanique vers un deuxième arbre chargé de transmettre une deuxième indication de mesure, ledit premier arbre étant creux et étant disposé coaxialement autour dudit deuxième arbre central, caractérisé en ce que l'arbre creux est soutenu et guidé par un premier palier comprenant une surface cylindrique extérieure d'un touret de guidage aménagé sur un pontet de guidage monté rigidement au boîtier, le touret de guidage étant inséré dans l'arbre creux à une extrémité dudit arbre. Le touret de guidage comprend une cavité traversant axial pour le libre passage de l'arbre central à travers le touret de guidage, le diamètre d'alésage dudit trou traversant axial étant supérieur au diamètre extérieur de l'arbre central en cet endroit. Un deuxième palier formé par une surface intérieure d'une extension tubulaire du boîtier s'étend d'une face extérieure de l'actionneur vers l'extrémité libre de l'arbre creux.

L'arbre central est soutenu et guidé par un premier palier de préférence sous forme d'un logement dans une face interne de la première portion de boîtier, et par un deuxième palier sous forme d'un alésage aménagé sur une portion de paroi interne de l'arbre creux.

Le deuxième palier de l'arbre central est de préférence disposé à une distance supérieure au diamètre de l'arbre creux du deuxième palier de l'arbre creux afin de permettre une certaine compression ou extension élastique de l'arbre creux le long desdits paliers.

Avantageusement, le guidage de chacun des arbres est réalisé de manière indépendant, permettant ainsi d'augmenter les distances entre appuis et guidages de chacun des arbres sans pour autant augmenter l'épaisseur de l'actionneur. Ceci permet également de diminuer l'usure des paliers, améliorant la précision d'affichage et augmentant sa fiabilité et sa longévité.

Les moyens de mesure peuvent comporter chacun un moteur électrique comprenant un stator avec un circuit magnétique s'étendant dans un plan essentiellement orthogonal aux arbres coaxiaux et deux bobines montées sur des extensions du circuit magnétique, ainsi qu'un rotor. Les deux moteurs sont de préférence identiques et disposés dans le même plan symétriquement relativement auxdits arbres afin d'avoir un actionneur à faible épaisseur.

Des bornes de connexion desdites bobines traversent de préférence une paroi de l'une des portions de boîtier du côté de l'extension des arbres de l'actionneur pour permettre le montage de l'actionneur au dos d'une plaquette de circuit par rapport au côté d'affichage. Cette réalisation n'est néanmoins pas limitative et il est possible d'envisager les bornes de connexion des bobines traversant du côté opposé à l'extension des arbres de l'actionneur en fonction du dispositif accueillant l'application et son agencement.

Avantageusement, les composants formant l'actionneur sont agencés de manière à ce que l'ensemble de ses composants puisse être monté axialement depuis un seul côté d'une desdites portions de boîtier.

L'actionneur peut en outre comporter des moyens de fixation aptes à fixer l'actionneur sur une plaquette de circuit d'un instrument ou d'un tableau de bord sur laquelle il est destiné à être installé, ainsi que des moyens de détrompage permettant d'assurer une orientation correcte.

D'autre part, les éléments de guidage sont faciles à fabriquer et à assembler aux autres éléments de l'actionneur.

D'autres buts et aspects avantageux de l'invention ressortiront des revendications, de la description détaillée ci-après, ainsi que des dessins annexés, dans lesquels:

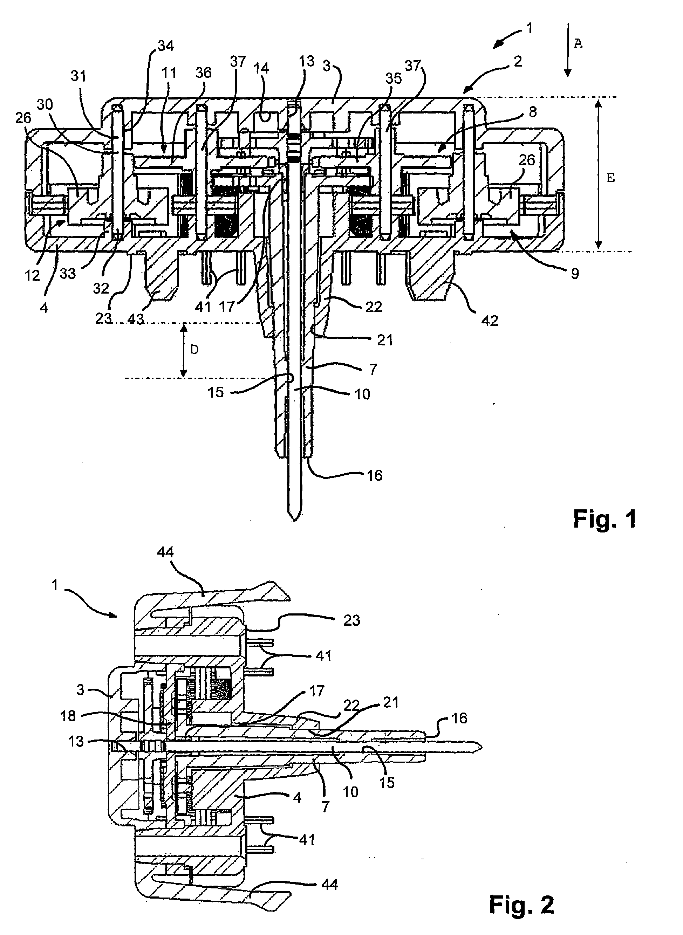

la figure 1 est une coupe selon un premier plan d'une forme d'exécution préférée d'un actionneur pour indicateurs de mesures selon l'invention ;
la figure 2 est une coupe selon un plan perpendiculaire à celui de la figure précédente, du même dispositif ;

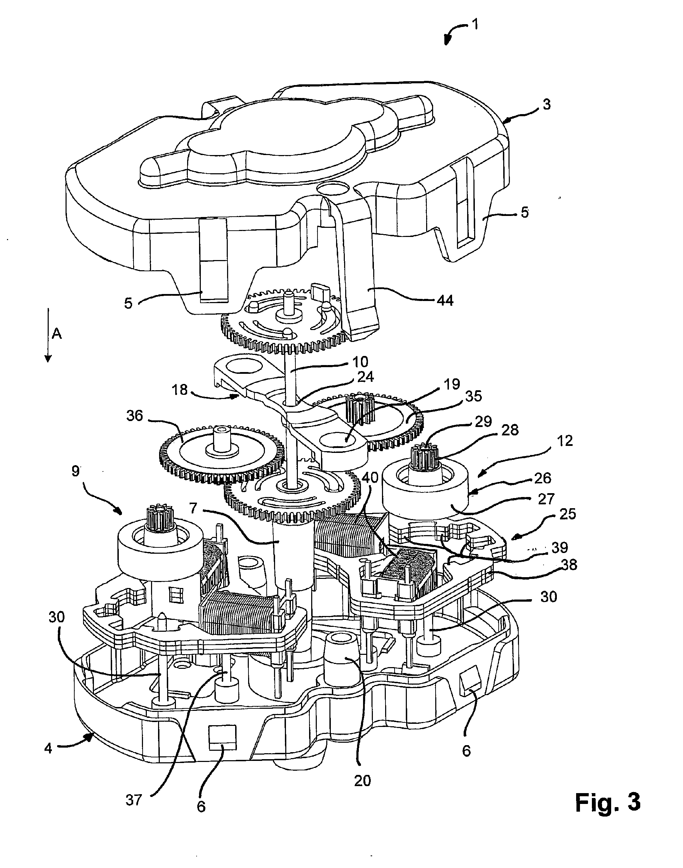

la figure 3 est une vue éclatée en perspective de l'actionneur des figures précédentes ;

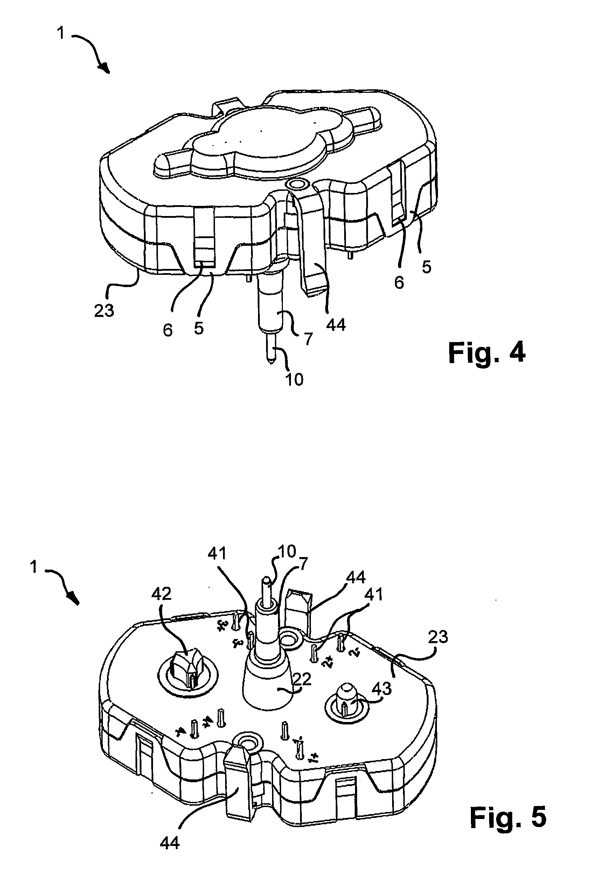

les figures 4 et 5 sont des vues en perspective de l'actionneur des figures précédentes.

L'actionneur pour indicateurs de mesures 1 représenté sur les figures comprend un boîtier 2 comportant une première portion 3 et une deuxième portion 4, un premier arbre 7 creux couplé par un premier train d'engrenages 8 à un premier moteur 9, ainsi qu'un deuxième arbre 10 central couplé par un deuxième train d'engrenages 11 à un deuxième moteur 12, les arbres 7, 10 étant coaxiaux. Les deux portions de boîtiers 3 et 4 sont munies de moyens 5, 6 permettant de les assembler afin de fermer le boîtier. Les deux moteurs 9 et 12 sont chacun directement et indépendamment alimentés par un signal image de la valeur à mesurer. Chaque arbre 7, 10 prend donc un décalage angulaire fonction de sa propre valeur à mesurer.

L'arbre central 10 est supporté et guidé d'une part par un premier palier sous forme d'un logement creux 13 aménagé sur la paroi interne 14 de la première portion de boîtier 3 et d'autre part par un deuxième palier 15 aménagé sur une portion de paroi interne de l'arbre creux 7 à proximité de son extrémité libre 16. L'arbre creux 7 est guidé lui, d'une part par un premier palier sous forme de touret de guidage 17 aménagé sur un pontet de guidage 18 disposé et fixé solidement par des moyens de fixation 19, 20 sur la deuxième portion de boîtier 4, d'autre part par un deuxième palier 21 sous forme de trou traversant circulaire aménagé sur une extension tubulaire 22 de la deuxième portion de boîtier 4. L'extension tubulaire 22 s'étend de la surface de montage 23 du boîtier 2 vers l'extrémité libre 16 de l'arbre creux afin d'augmenter la distance entre les premier et deuxième paliers 17, 21, réduisant donc les forces normales sur les paliers dus au basculement de l'arbre creux ou de l'arbre central. La distance entre les paliers 13, 15 de l'arbre central est aussi relativement grande par rapport à l'épaisseur E de l'actionneur afin de réduire les forces normales sur les paliers dus au moment de basculement de l'arbre central.

Avantageusement le deuxième palier 15 de l'arbre central est décalé par une certaine distance D du deuxième palier 21 de l'arbre creux. De préférence cette distance (D) entre les deuxièmes paliers est supérieure au diamètre de l'arbre creux. Ceci permet une certaine compression ou extension élastique de l'arbre creux le long du palier 21, respectivement le long du palier 15, réduisant l'usure des surfaces d'appui des paliers et les jeux.

Le pontet de guidage 18 est constitué de telle manière que le touret de guidage 17 présente un trou traversant axial 24 de diamètre plus grand que le diamètre extérieur en cet endroit de l'arbre central 10 qui le traverse. Ainsi, le pontet de guidage n'offre un guidage et un appui qu'à l'arbre creux 7, l'arbre central 10 pivotant librement, sans appui ni guidage, à l'intérieur du touret 17.

Les distances entre appuis sont importantes relativement à l'épaisseur totale E du dispositif, l'arbre creux étant soutenu et guidé par les paliers 21, 17, relativement éloignés l'un de l'autre, alors que l'arbre central 10 est soutenu et guidé par les paliers 13, 15, aussi relativement éloignés l'un de l'autre, dont au moins un palier 13, respectivement 17, de chaque arbre est indépendant et fait partie intégrant du boîtier ou d'une pièce fixé rigidement au boîtier.

Les moteurs 9, 12 sont identiques et comprennent chacun un stator 25 et un rotor 26. Le rotor comprend un aimant permanent 27 en forme d'anneau ayant une pluralité de segments d'arc de polarité alterné -Nord-Sud-Nord-Sud-, monté sur un pignon 28, par exemple en matière plastique injectée, avec un trou central 29 agissant en tant que palier pour un axe de support 30, de préférence sous forme de pin métallique monté à ces extrémités 31, 32 dans des logements 33, 34 des faces internes de chaque portion de boîtier 3, 4. Les roues d'engrenage intermédiaires 35, 36 sont également supportées par des axes 37, sous forme de pin métalliques de préférence identiques aux axes de support 30 des rotors. Cette configuration permet de simplifier le montage des composants dans le boîtier et de réduire les coûts de fabrication.

Le stator comprend un circuit magnétique 38 fermé comportant un empilement de feuilles en un matériau magnétique et ayant des pôles sous forme d'extensions 39 vers le rotor 26, et deux bobines 40 de préférence identiques montées sur des extensions du circuit magnétique. Les deux moteurs 9, 10 sont disposés sur un même plan parallèle au plan dans lequel s'étend les circuits magnétiques 25, perpendiculaire aux arbres 7, 10, de manière symétrique relativement à ces deux arbres. Cette disposition particulière, associée à la construction compacte desdits moteurs minimise ainsi l'épaisseur du dispositif. On remarque aussi que les moteurs, les engrenages, les axes de support et les arbres de sortie peuvent tous êtres montés dans le boîtier dans une même direction axial A, par exemple du même côté sur la portion 4 du boîtier, suite de quoi le boîtier est refermé par la portion 3 dudit boîtier. Cette manière de faire simplifie de manière avantageuse le montage des composants du dispositif. On remarque aussi que les bornes 41 des moteurs transmettant le signal électrique de mesure aux bobines 40 traversent la paroi de la portion de boîtier 4 et s'étendent du même côté que les arbres 7, 10 pour être reliées par enfichage sur une portion de plaquette de circuit d'un tableau de bord ou d'un instrument. Un trou de passage pour les arbres et l'extension de support 22 de l'actionneur doit donc être prévu dans la plaquette de circuit (non illustré). Une telle configuration est particulièrement compacte tout en permettant de profiter de l'épaisseur de la plaquette (non illustré) pour l'extension de support 22 afin d'avoir une distance relativement grande entre les paliers 17, 21.

Le boîtier comprend en outre des moyens de détrompage 42, 43 et de fixation disposés sur la face de montage 23 de la portion 4 de boîtier, destinés d'une part à fixer le boîtier sur la plaquette sur laquelle il est destiné à être installé, d'autre part à empêcher une disposition non correcte du dispositif cette plaquette. Des moyens de fixation élastiques supplémentaires 44 sont également prévus, visibles ici sur la portion 3 de boîtier, permettant de fixer le dispositif sur ladite plaquette de tableau de bord ou d'instrument.

L'actionneur selon l'invention est avantageusement précis, fiable et caractérisé par un faible usure. Par ailleurs il est de construction compacte, notamment de faible épaisseur, et l'assemblage des éléments qui le composent est unidirectionnelle et donc simple. De plus son installation sur une plaquette de circuit d'un tableau de bord sur laquelle il est destiné à être installé est aussi simple.

## Revendications

1. Actionneur (1) pour indicateurs de mesures pour un tableau de bord ou instrument d'un véhicule, comprenant un boîtier (2) comprenant une première portion (3) et une deuxième portion (4), un premier moyen de mesure transformant un premier signal électrique de mesure en un premier signal mécanique, un moyen de transmission de ce premier signal mécanique vers un premier arbre chargé de transmettre une première indication de mesure, un deuxième moyen de mesure transformant un deuxième signal électrique de mesure en un deuxième signal mécanique, et un moyen de transmission de ce deuxième signal mécanique vers un deuxième arbre chargé de transmettre une deuxième indication de mesure, ledit premier arbre (7) étant creux et étant disposé coaxialement autour dudit deuxième arbre (10) central,
l'arbre creux est soutenu et guidé par un premier palier (17) comprenant une surface cylindrique extérieure d'un touret de guidage aménagé sur un pontet de guidage (18), le touret de guidage étant inséré dans le trou central traversant l'arbre creux
à une extrémité dudit arbre et comprenant une cavité traversant axial (24) pour le libre passage de l'arbre central (10) à travers le touret de guidage,
et un deuxième palier (21) formé par une surface intérieure d'une extension tubulaire (22) du boîtier s'étendant d'une face extérieure (23) de l'actionneur vers l'extrémité libre de l'arbre creux, **caractérisé en ce que** le pontet de guidage est monté rigidement au boîtier (2) et **en ce que** le diamètre d'alésage dudit trou traversant axial est supérieur au diamètre extérieur dudit arbre central (10) en cet endroit.

2. Actionneur selon la revendication 1, **caractérisé en ce que** l'arbre central (10) est soutenu et guidé par un premier palier (13) sous forme d'un logement dans une face interne de la première portion (3) de boîtier, et par un deuxième palier sous forme d'un alésage (21) aménagé sur une portion de paroi interne de l'arbre creux (7).

3. Actionneur selon la revendication 2, **caractérisé en ce que** le deuxième palier de l'arbre central est disposé à une certaine distance (D) du deuxième palier de l'arbre creux.

4. Actionneur selon la revendication 3, **caractérisé en ce que** la distance (D) entre les deuxièmes paliers est supérieure au diamètre de l'arbre creux.

5. Actionneur selon l'une des revendications précédentes, **caractérisé en ce que** les moyens de mesure comportent chacun un moteur électrique comprenant un stator avec un circuit magnétique (25) s'étendant dans un plan essentiellement orthogonal aux arbres coaxiaux et deux bobines (40) montées sur des extensions du circuit magnétique, ainsi qu'un rotor (26), les deux moteurs étant identiques et disposés dans le même plan symétriquement relativement auxdits arbres.

6. Actionneur selon l'une des revendications précédentes, **caractérisé en ce qu'**il est agencé de manière à ce que l'ensemble de ses composants puisse être monté axialement depuis un seul côte d'une desdites portions de boîtier (4).

7. Actionneur selon l'une des revendications précédentes, **caractérisé en ce que** le boîtier (2) comprend des moyens de fixation (44) aptes à fixer ledit dispositif sur une plaquette de circuit d'un instrument ou d'un tableau de bord sur laquelle il est destiné à être installé, ainsi que des moyens de détrompage (42, 43) permettant d'assurer une orientation correcte.

8. Actionneur selon l'une des revendications précédentes, **caractérise en ce que** le rotor comprend un aimant permanent (27) en forme d'anneau ayant une pluralité de segments d'arc de polarité alterné -Nord-Sud-Nord-Sud-, solidaire d'un pignon (28) en matière plastique injecté avec un trou central 29 agissant en tant que palier pour un axe de support (30).

9. Actionneur selon l'une des revendications précédentes, **caractérisé en ce que** les moyens de mesure comportent chacun un moteur électrique comprenant un stator ainsi qu'un rotor (26), et **en ce que** les moyens de transmission comprennent des roues d'engrenages (35, 36), les roues d'engrenages et les rotors des moteurs étant supportés et guidés par des axes essentiellement identiques sous forme de pins montés à leurs extrémités (31, 32) dans des logements (33, 34) des faces internes de chaque portion de boîtier (3, 4).

## Patentansprüche

1. Aktuator (1) für Messwertanzeiger für eine Instrumententafel oder ein Instrument eines Fahrzeugs, umfassend ein Gehäuse (2), das einen ersten Abschnitt (3) und einen zweiten Abschnitt (4) umfasst, wobei ein erstes Messmittel ein erstes elektrisches Messsignal in ein erstes mechanisches Signal umwandelt, ein Übertragungsmittel dieses ersten mechanischen Signals zu einer erste Welle, deren Aufgabe darin besteht, eine erste Messwertanzeige zu übertragen, wobei ein zweites Messmittel ein zweites elektrisches Messsignal in ein zweites mechanisches Signal umwandelt, und ein Übertragungsmittel dieses zweiten mechanischen Signals zu einer zweiten Welle, deren Aufgabe darin besteht, eine zweite Messwertanzeige zu übertragen, wobei die erste Welle (7) hohl ist und koaxial um die zweite zentrale Welle (10) angeordnet ist,
wobei die hohle Welle von einem ersten Lager (17) gestützt und geführt wird, das eine äußere zylindrische Fläche einer Führungsrolle umfasst, die auf einem Führungssteg (18) ausgebildet ist, wobei die Führungsrolle in das zentrale Loch eingesetzt ist, das die hohle Welle an einem Ende der Welle durchquert und eine axiale durchgehende Aufnahme (24) für den freien Durchgang der zentralen Welle (10) durch die Führungsrolle umfasst, und ein zweites Lager (21), das von einer inneren Fläche einer rohrförmigen Erweiterung (22) des Gehäuses gebildet wird, die sich von einer äußeren Fläche (23) des Aktuators zum freien Ende der hohlen Welle erstreckt,
**dadurch gekennzeichnet, dass** die Führungsbrücke starr auf dem Gehäuse (2) montiert ist und dass der Durchmesser der Bohrung des axial durchgehenden Lochs größer ist als der Außendurchmesser der zentralen Welle (10) an dieser Stelle.

2. Aktuator nach Anspruch 1, **dadurch gekennzeichnet, dass** die zentrale Welle (10) von einem ersten Lager (13) in Form einer Aufnahme in einer inneren Fläche des ersten Abschnitts (3) des Gehäuses und von einem zweiten Lager in Form einer Bohrung (21), die auf einem Abschnitt der Innenwand der hohlen Welle (7) ausgebildet ist, gestützt und geführt wird.

3. Aktuator nach Anspruch 2, **dadurch gekennzeichnet, dass** das zweite Lager der zentralen Welle in einem bestimmten Abstand (D) vom zweiten Lager der hohlen Welle angeordnet ist.

4. Aktuator nach Anspruch 3, **dadurch gekennzeichnet, dass** der Abstand (D) zwischen den zwei Lagern größer ist als der Durchmesser der hohlen Welle.

5. Aktuator nach einem der vorangehenden Ansprüche, **dadurch gekennzeichnet, dass** die Messmittel jeweils einen Elektromotor aufweisen, der einen Stator mit einem Magnetkreis (25) umfasst, der sich in einer im Wesentlichen zu den beiden koaxialen Wellen orthogonalen Ebene erstreckt, und zwei Spulen (40), die auf Erweiterungen des Magnetkreises montiert sind, sowie einen Rotor (26), wobei die zwei Motoren identisch sind und in derselben Ebene im Verhältnis zu den Wellen symmetrisch angeordnet sind.

6. Aktuator nach einem der vorangehenden Ansprüche, **dadurch gekennzeichnet, dass** er derart angeordnet ist, dass die Gesamtheit seiner Bauteile von einer einzigen Seite einer der Abschnitte des Gehäuses (4) axial montierbar ist.

7. Aktuator nach einem der vorangehenden Ansprüche, **dadurch gekennzeichnet, dass** das Gehäuse (2) Befestigungsmittel (44) umfasst, die imstande sind, die Vorrichtung auf einer Schaltkreisplatte eines Instruments oder einer Instrumententafel zu befestigen, auf der sie bestimmt ist, installiert zu sein, sowie Unverwechselbarkeitsmittel (42, 43), die eine korrekte Ausrichtung sicherstellen.

8. Aktuator nach einem der vorangehenden Ansprüche, **dadurch gekennzeichnet, dass** der Rotor einen Dauermagneten (27) in Form eines Rings umfasst, der eine Vielzahl von Bogensegmenten alternierender Polarität -Nord-Süd-Nord-Südhat, der mit einem Zahnrad (28) aus Spritzgusskunststoff mit einem zentralen Loch (29) verbunden ist, das für eine Stützachse (30) als Lager fungiert.

9. Aktuator nach einem der vorangehenden Ansprüche, **dadurch gekennzeichnet, dass** die Messmittel jeweils einen Elektromotor umfassen, der einen Stator sowie einen Rotor (26) umfasst, und dass die Übertragungsmittel Getrieberäder (35, 36) umfassen, wobei die Getrieberäder und die Rotoren der Motoren von im Wesentlichen identischen Achsen in Form von Stiften gestützt und geführt werden, die an ihren Enden (31, 32) in Aufnahmen (33, 34) der inneren Flächen jedes Gehäuseabschnitts (3, 4) montiert sind.

## Claims

1. An actuator (1) for measurement indicators for a dashboard or instrument panel of a vehicle, comprising a housing (2) having a first portion (3) and a second portion (4), first measuring means transforming a first electrical measuring signal into a first mechanical signal, means for transmitting this first mechanical signal to a first shaft serving to transmit a first measurement indication, second measuring means transforming a second electrical measuring signal into a second mechanical signal, and means for transmitting this second mechanical signal towards a second shaft serving to transmit a second measurement indication, said first shaft (7) being hollow and being arranged coaxially about said second central shaft (10),
the hollow shaft is supported and guided by a first bearing (17) comprising an external cylindrical surface of a guiding turret arranged on a guiding bridge (18), the guiding turret being inserted into the central hole passing through the hollow shaft at one end of said shaft and comprising an axial through cavity (24) for free passage of the central shaft (10) through the guiding turret, and a second bearing (21) formed by an internal surface of a tubular extension (22) of the housing extending from an external face (23) of the actuator towards the free end of the hollow shaft,
**characterised in that** the guiding bridge is mounted rigidly on the housing (2) and **in that** the diameter of the bore of said axial through cavity is greater than the external diameter of said central shaft (10) at this point.

2. The actuator according to Claim 1, **characterised in that** the central shaft (10) is supported and guided by a first bearing (13) in the form of a housing in an internal face of the first housing portion (3), and by a second bearing in the form of a bore (21) arranged on a portion of internal wall of the hollow shaft (7).

3. The actuator according to Claim 2, **characterised in that** the second bearing of the central shaft is arranged at a certain distance (D) from the second bearing of the hollow shaft.

4. The actuator according to Claim 3, **characterised in that** the distance (D) between the second bearings is greater than the diameter of the hollow shaft.

5. The actuator according to any one of the preceding claims, **characterised in that** the measuring means each comprise an electric motor comprising a stator with a magnetic circuit (25) extending in a plane substantially orthogonal to the coaxial shafts and two coils (40) mounted on extensions of the magnetic circuit, and a rotor (26), the two motors being identical and arranged symmetrically in the same plane relative to said shafts.

6. The actuator according to any one of the preceding claims, **characterised in that** it is arranged such that all of its components can be mounted axially from one side of one of said housing portions (4).

7. The actuator according to any one of the preceding claims, **characterised in that** the housing (2) comprises fastening means (44) capable of fixing said device on a circuit board of an instrument panel or dashboard on which it is intended to be installed, and coding means (42, 43) for ensuring correct orientation.

8. The actuator according to any one of the preceding claims, **characterised in that** the rotor comprises a permanent magnet (27) in the form of a ring having a plurality of segments of an arc of alternating North-South-North-South polarity, connected to a pinion (28) made of injected plastic material with a central hole (29) acting as a bearing for a support axis (30).

9. The actuator according to any one of the preceding claims, **characterised in that** the measuring means each comprise an electric motor comprising a stator and a rotor (26), and **in that** the transmission means comprise meshing wheels (35, 36), the meshing wheels and the rotors of the motors being supported and guided by substantially identical axes in the form of pins mounted by their ends (31, 32) in housings (33, 34) of the internal faces of each portion of housing (3, 4).
